(19) Europäisches Patentamt
European Patent Office
Office européen des brevets

(11) Numéro de publication : **0 457 694 A1**

(12) # DEMANDE DE BREVET EUROPEEN

(21) Numéro de dépôt : **91420139.7**

(51) Int. Cl.$^5$ : **C08G 18/34**, C08G 73/14, C08G 18/08

(22) Date de dépôt : **26.04.91**

(30) Priorité : **17.05.90 FR 9006537**

(43) Date de publication de la demande : **21.11.91 Bulletin 91/47**

(84) Etats contractants désignés : **AT BE CH DE DK ES FR GB IT LI LU NL SE**

(71) Demandeur : **RHONE-POULENC FIBRES
129, rue Servient
F-69003 Lyon (FR)**

(72) Inventeur : **Lambla, Morand
2 rue Albert Camus
F-67800 Hoenheim (FR)**
Inventeur : **Michaud, Philippe
100 rue Bugeaud
F-69006 Lyon (FR)**
Inventeur : **Russo, Jean
21 chemin de Montribloud
F-69009 Lyon (FR)**

(74) Mandataire : **Braconnier, Daniel et al
Rhône-Poulenc Fibres, Brevets Fibres & Polymères, BP 62, Centre de Recherche des Carrières
F-69192 Saint-Fons Cédex (FR)**

(54) **Procédé pour l'obtention de polyamides-imides semi-ordonnés.**

(57) La présente invention concerne un procédé pour l'obtention de polyamides-imides semi-ordonnés.
Plus particulièrement il consiste à réaliser la polycondensation en deux phases distinctes :
1) réaction entre une partie d'un diisocyanate aromatique et la totalité de l'anhydride trimellique en présence de diméthylalkylène urée de pH $\leqq$ 7 jusqu'à dissolution du composé intermédiaire,
2) addition successivement de un ou plusieurs diacides aromatiques et du reste du diisocyanate aromatique dans la diméthylalkylène urée de pH $\leqq$ 7 jusqu'à dissolution complète du polyamide-imide obtenu.
Les polymères semi-ordonnés ainsi obtenus possèdent un TG inférieur aux polymères statistiques ce qui facilite leur mise en forme.

EP 0 457 694 A1

Jouve, 18, rue Saint-Denis, 75001 PARIS

La présente invention a pour objet un procédé de préparation de polyamides-imides semi-ordonnés.

Il est déjà connu selon le FR 1498015 de préparer des polyamides imides par réaction en une seule étape entre au moins un diisocyanate aromatique ou aliphatique et au moins un composé carbonylé capable de fournir, à la fois, un amide et un imide interne et contenant d'une part, un groupe carboxyle, et, d'autre part, une paire de groupe carbonyles reliés, chacun, d'un côté à un atome de carbone différent d'un même radical trivalent, et de l'autre à un atome d'oxygène, les deux groupes carbonyles étant séparés par trois atomes de carbone au maximum, le groupe carboxyle étant séparé de chacun des groupes carbonyles par deux atomes de carbone au minimum, dans un rapport molaire 1:1 dans un solvant polaire du type N,N-diméthylacétamide, N,N-diméthylformamide, N-méthyl-2 pyrrolidone et diméthylsulfoxyde.

Il est également connu selon l'EP A 194058 de préparer des polyamides et/ou polyimides par polycondensation en une seule étape à une température supérieure à 100°C entre un acide polycarboxylique ou un anhydride acide, un diisocyanate aliphatique ou aromatique en présence d'un catalyseur du type (hydrogeno) carbonate alcalin, hydroxyde alcalin, ou sel alcalin d'acide polycarboxylique dans un solvant N,N-diméthylalkylène urée. D'après cette demande, l'introduction des monomères est effectuée selon un ordre arbitraire.

Les procédés connus pour l'obtention de polyamides-imides concernent tous l'obtention de polymères statistiques selon des procédés comprenant une seule étape de réaction.

Il a maintenant été trouvé qu'il était possible d'obtenir des polyamides-imides semi-ordonnés possédant une température de transition vitreuse de premier ordre (TG) plus basse que celle des polymères statistiques connus jusque là. Ces polyamides-imides présentent l'avantage d'être transformables à plus basse température.

Plus particulièrement, la présente invention concerne l'obtention de polyamides-imides issus d'un diisocyanate aromatique, l'anhydride trimellique et d'acide téréphtalique, dans la diméthylalkylène urée de pH $\leqq 7$ par polycondensation, en absence de catalyseur, en deux phases distinctes comprenant :

1) la réaction entre x moles de diisocyanate aromatique de formule $OCN\text{-}R_1\text{-}NCO$ et y moles d'anhydride trimellique à une température croissante de 0 à 200 °C en présence d'une quantité de diméthylalkylène urée de pH $\leqq 7$, suffisante pour dissoudre le composé intermédiaire obtenu jusqu'à élimination pratiquement totale du dioxyde de carbone correspondant à la quantité théoriquement formée jusque là, puis

2) l'addition à température de 190 à 200 °C successivement de :

– z moles de diacide aromatique dont t moles de diacide porteur de groupements $SO_3M$ véhiculées par de la diméthylalkylène urée de pH $\leqq 7$, M représentant un métal alcalin.

– et le complément en diisocyanate aromatique (v moles) goutte à goutte, et de la diméthylalkylène urée en quantité suffisante pour la dilution complète du polyamide-imide, la proportion de diisocyanate étant en léger excès par rapport à celle des réactifs acides, avec

$$x \simeq 0{,}5\, y$$
$$y+z = 1$$
$$0 \leqq t \leqq z$$
$$0{,}5\, y + z \leqq v \leqq 0{,}55\, y + 1{,}05\, z$$

les valeurs de x, y, z et t ramenées en pourcentages sont les suivantes :

x = 35 à $<$ 50 moles %
y est compris entre 70 et $\leqslant$ 100 moles %
z " " " 0 et 30 moles %
t " " " 0 et 30 moles %

de préférence :

x est compris entre 35 et $\leqslant$ 42,5 moles %
y " " " 70 et $\leqslant$ 85 moles %
z " " " 15 et 30 moles %
t " " " 2 et 10 moles %

La première phase de la réaction consiste à faire réagir la totalité de l'anhydride trimellique y moles sur

un défaut de diisocyanate par rapport à la stoechiométrie (x moles) afin de former majoritairement des séquences à structure imide majoritaire selon la réaction :

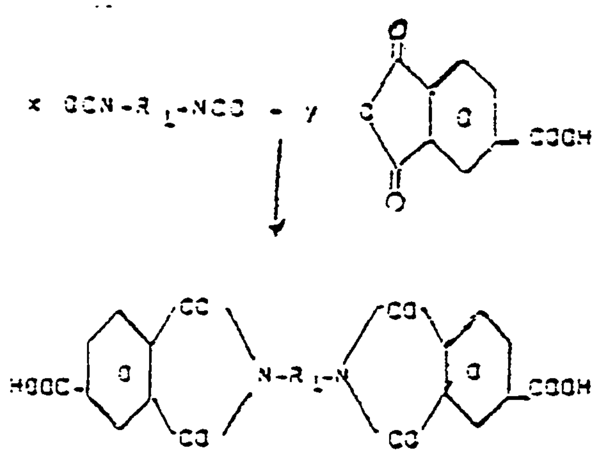

avec $x = 0,5\ y$

Dans la seconde étape les diacides aromatiques sont engagés à raison de z moles dont t moles de diacide porteur de groupes $SO_3M$ tel que :

$$0 < z \leqq 0,5\ y$$
$$0 \leqq t \leqq z$$

On additionne alors le complément en diisocyanates v moles tel que :

$$0,5\ y + z \leqq v \leqq 0,55\ y + 1,05\ z$$

Les réactions sont les suivantes :

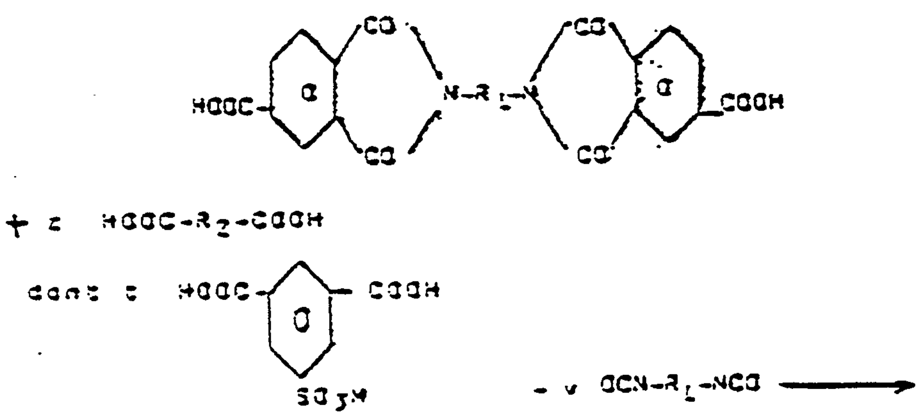


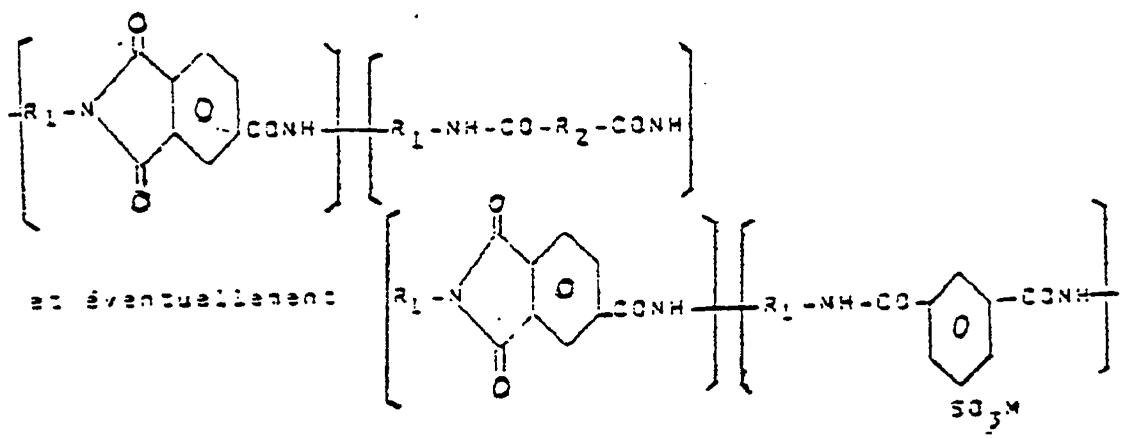

et éventuellement

On entend par stoechiométrie la réaction entre un nombre égal de groupes réactifs isocyanates et de groupes réactifs anhydrides et acides. Selon l'invention, parmi les diisocyanates aromatiques utilisables on peut citer les diisocyanato-2,4 ou 2,6 toluène, le diisocyanato-4,4'diphénylméthane, le diisocyanato-4,4'diphényléther, le diisocyanato-1,4 benzène, le diisocyanato-1,3 benzène ou leur mélange.

Le diisocyanate préféré est le diisocyanato-4,4'diphénylméthane.

Parmi les diacides aromatiques des acides téréphtalique et isophtalique sont généralement utilisés quoique l'acide téréphtalique soit préféré.

Comme diacide porteur de groupement $SO_3M$ les dicarboxy-3,5 benzène sulfonates de sodium ou potassium sont utilisés préférentiellement.

Il est important dans les conditions de l'invention d'utiliser de la diméthyléthylène urée (DMEU) ou de la diméthylpropylène urée (DMPU) de pH $\leqq 7$, de préference compris entre 5 et 7 ; dans le cas contraire la polycondensation est limitée en masse moléculaire.

Par ailleurs, des solvants autres que les diméthylalkylènes urées ont été utilisés, tels que la la N-méthylpyrrolidone : la polycondensation séquencée est incomplète, le polyamide-imide obtenu possède une viscosité trop faible.

Il est nécessaire d'utiliser de l'anhydride trimellique anhydre et de pureté $\geqq 98$ %.

Les polyamides-imides semi-ordonnés ainsi obtenus possèdent un nombre de séquences imide-imide et amide-amide supérieur à celui d'un polyamide-imide obtenu en une seule étape dans le même solvant ou dans un autre solvant. De tels polymères possèdent également une température de transition vitreuse inférieure de 5 à 20°C par rapport à celle des polymères statistiques issus des mêmes constituants.

Lors de leur mise en forme par filage, filmage ou moulage, ils sont ainsi plus aisés à tranformer, en particulier à des températures plus basses ce qui permet de limiter les phénomènes de dégradation pouvant se produire.

Dans les exemples qui suivent la détermination de la température de transition vitreuse Tg est réalisée au pendule à fibre de la manière suivante :

La solution du polymère est utilisée pour enduire une tresse de verre de type E désensimé de 5cm de long. Cette tresse imprégnée est séchée sous un vide de $53{,}2.10^{-2}$ Pa à 120 °C pendant 12 heures. Cette tresse est ensuite soumise à une sollicitation dynamique en torsion à l'aide d'un pendule à fibre. On mesure ainsi la variation de rigidité de l'échantillon en fonction de la température, ce qui permet de déterminer les températures de transition vitreuse (Tg) du matériau.

La caractérisation des enchaînements imide et amide est effectuée par résonance magnétique nucléaire (RMN'H) au moyen d'un appareil connu dans le commerce sous la marque Bruker. Cette analyse est réalisée de la manière suivante :

Le polymère est isolé par précipitation dans l'eau, lavage à l'eau bouillante et séchage (12 H à 100 °C sous $53{,}2.10^{-2}$ Pa) puis remis en solution à 5 % (poids) dans du DMSO deutérié sous septum chauffé à 130 °C.

Les conditions d'analyses RMN'H sont :

- angle d'impulsion : 26 °
- temps d'acquisition : 3,4 s par 16 K mots
- nombre d'accumulation : 512
- temps d'attente : 2 s

Les enchaînements (imide-imide), (imide-amide), (amide-amide) sont détectés grâce aux résonances méthyléniques (ex. MDI) à 4,2-3,7 ppm.

On observe un massif formé de 3 types de raies II, IA et AA.

Par déconvolution, on obtient le pourcentage molaire de chaque type de $CH_2$ ( % IA, % AA, % II).

Dans les exemples qui suivent, la DMEU utilisée a un pH de 6 est la DMPU un pH de 7.

**Exemple 1 :**

**Appareillage :**

Réacteur en verre de 1,5 l équipé d'un agitateur de type ancre en acier inoxydable, vitesse de rotation 85t/mn, d'une ampoule de coulée de 250 ml destinée à l'addition de la solution de diisocyanate de l'étape 2 et du solvant de dilution, d'une arrivée d'azote sur compte-bulle, d'une sonde thermométrique et d'un réfrigérant à reflux avec sortie sur compte-bulle. La sortie du réfrigérant est reliée à une colonne garnie de 600 g de chaux sodée destinée à piéger le gaz carbonique qui se dégage au cours de la réaction de polycondensation. Une balance placée à proximité de l'installation permet d'enregistrer l'augmentation de poids de la colonne garnie de chaux sodée (accès direct en poids de $CO_2$ dégagé).

Le chauffage du réacteur est amené par un bain d'huile silicone piloté par système LOGILAP assisté d'un émetteur de programme de montée en température et éventuellement de maintien en isotherme à une température

donnée (dans la majeure partie des cas 198 °C).

**Réactifs :**

| | | |
|---|---|---|
| Etape 1 : | -Anhydride trimellique (ANTM) ....... | 61,44 g (0,32 mole) |
| | -Diisocyanato-4,4'diphényl méthane (MDI) ............................ | 40 g (0,16 mole) |
| | -Diméthyléthylène urée (DMEU) ....... | 125 ml |
| Etape 2 : | -Acide téréphtalique (AT) ........... | 10,62 g(0,064 mole) |
| | -Dicarboxy 3,5 benzène sulfonate de sodium (AiSNa) .................... | 4,29 g(0,016 mole) |
| | -DMEU .............................. | 100 ml |
| | -MDI ........................ | 60+3=63 g (0,252 mole) |
| | -DMEU ...................... | 100 ml |
| | -DMEU rinçages ............... | 37 ml |
| | -DMEU dilution 27--> 21 % .... | 149,4 g(d=1,055)soit 142 ml |
| | -DMEU engagée à la polycondensation .................. | 381,6 g(d=1,055)soit 362 ml |

**Mode opératoire :**

Etape 1 -

On charge ANTM, MDI, DMEU, agite et purge l'appareil par balayage d'azote durant 40 minutes. La température est montée à 198°C en 1 h 10 mn avec dégagement de $CO_2$ : 13,5g piégés sur chaux sodée, théorie 14,08 g soit 95,88 %.

Etape 2 -

Addition, de l'AT et de l'AiSNa (en poudre) puis de 100 ml de DMEU afin de véhiculer ces réactifs. La température passe de 198 à 151 °C. On effectue la stabilisation de la température masse à 198 °C et l'addition en 32 mn de la solution MDI (63g)/DMEU. Le début d'accroissement de la viscosité se situe 25 mn après le début de la coulée et la valeur de couple atteint 100 mv 8 mn après la fin de celle-ci. On ajoute alors la DMEU de dilution en 8 mn, la température masse diminue de 198 à 150 °C, on laisse revenir à température ambiante et on stocke.

**Caractérisation :**

Viscosité : Epprecht Rhéomat 15 - cuve D + E - 25°C

| vitesse | lecture | f | η (poises) |
|---|---|---|---|
| 9 | 57,2 | 12,36 | 707 |

Masses moléculaires : GPC - 60 °C - Vecteur NMP à $5.10^{-2}$ N en LiBr

(Masse donnée en équivalent Polystyrène)

| Troncature | Mn | Mw | Polydispersité |
|---|---|---|---|
| 1000 | 36560 | 76460 | 2,09 |

Le PAI ainsi obtenu possède un nombre de séquences indiquées dans le tableau ci-dessous comparativement à un PAI statistique obtenu à partir des mêmes monomères dans la N-méthylpyrolidone selon le procédé décrit dans le FR 2079785.

| | Exemple 1 (PAI séquencé) | Comparatif (PAI statistique) |
|---|---|---|
| Imide-imide | 24 % | 18 % |
| Imide-amide | 32 % | 44 % |
| Amide-amide | 44 % | 38 % |
| Température de transition vitreuse - Tg | 270°C | 285°C |

**Exemple 2 :**

On utilise l'appareil décrit dans l'exemple 1.

**But :**

Réalisation d'un PAI au MDI sans AiSNa (stoechiométrie compensée par de l'acide isophtalique) avec addition séquencée des réactifs.

**Appareillage :**

on utilise l'appareil décrit dans l'exemple 1.

**Réactifs :**

| | | | |
|---|---|---|---|
| Etape 1 : | -ANTM ........................ | 61,44 g | (0,32 mole) |
| | -MDI ......................... | 40 g | (0,16 mole) |
| | -DMEU ........................ | 125 ml | |
| Etape 2 : | -AT .......................... | 10,62 g | (0,064 mole) |
| | -AI (acide isophtalique) ...... | 2,66 g | (0,016 mole) |
| | -DMEU ........................ | 100 ml | |
| | -MDI ......................... | 60+3*=63 g | (0,252 mole) |
| | -DMEU ........................ | 100 ml | |
| | -DMEU rinçages ................ | 37 ml | |
| | -DMEU dilution 27 --> 21 % .... | 149,4g(d=1,055)soit 142 ml | |
| | -DMEU engagée à la polycondensation .................. | 381,6g(d=1,055)soit 362 ml | |

*=excès de 3 %/MDI total engagé à la polycondensation.

**Mode opératoire :**

Etape 1 :

On charge ANTM, MDI, DMEU, agite et purge par balayage d'azote durant 40 minutes. Début du chauffage jusqu'à 198°C en 1h 10 mm avec suivi du dégagement de $CO_2$ : 13,2g piégés sur chaux sodée, théorie 14,08g soit 95,88 %.

Etape 2 :

On ajoute de l'AT et de l'AI en poudre puis de 100 ml de DMEU afin de véhiculer ces 2 réactifs. On stabilise la température masse à 198 °C et ajoute en 32 mn la solution MDI (63 g) /DMEU.

Début d'accroissement de la viscosité 20mm après le début de la coulée. La DMEU de dilution est ajoutée 8 mm après la fin de la coulée de la solution MDI/DMEU.

Durée de l'addition de la DMEU de dilution 8 min. (La température masse diminue de 198 à 162°C). Retour à température ambiante.

Stockage du polymère.

**Caractérisation :**

Viscosité : Epprecht Rhéomat 15 - cuve D+E - 25 °C

| vitesse | lecture | f | η (poises) |
|---|---|---|---|
| 4 | 65 | 55,40 | 3601 |

**Exemple 3 :**

Comparatif (NMP)

**Appareil** : idem celui de l'exemple 1.

**Réactifs :**

Etape 1 : -ANTM ........................ 61,44 g (0,32 mole)
-MDI ........................ 40 g (0,16 mole)
-NMP (N-méthylpyrrolidone) .. 125 ml

Etape 2 : -AT ........................ 10,62 g (0,064 mole)
-AiSNa ........................ 4,29 g (0,016 mole)
-NMP ........................ 100 ml

-MDI ........................ 60 g (0,24 mole)
-NMP ........................ 100 ml
-NMP rinçages ................ 45,5 ml
-NMP dilution 27 --> 21 % .... 149,4 g(d=1,03)soit 145 ml
-NMP engagée à la polycondensation ............ 381,6 g(d=1,03)soit 370,5ml

**Mode opératoire :**

Etape 1

On charge ANTM, MDI, NMP, agite et purge par balayage d'azote durant 45 mn. La température est montée à 198 °C en 1 heure avec suivi du dégagement de $CO_2$ : 13,2 g piégés sur chaux sodée, théorie 14,08 g soit 93,75 %.

Etape 2

Addition de l'AT et de l'AiSNa (en poudre) puis de 100 ml de NMP afin de véhiculer ces 2 réactifs. La température passe de 198 à 153 °C. La température masse est stabilisée à 197-198 °C et on ajoute en 25 mn la solution MDI/DMEU ; on rince l'ampoule de coulée par 45,5 ml de NMP. Pas de montée en viscosité à la fin de la coulée. On laisse réagir 10 mn en isotherme à 198 °C, on n'observe toujours pas de montée de viscosité ($CO_2$ piégé à la fin de la coulée : 90,9 % de la théorie).

On procède alors à des ajouts de MDI (2 g + 1 g + 2 g dans chaque fois 10 ml de NMP) soit + 5 % /MDI théorique. Ces ajouts sont sans effet sur la viscosité.

On ajoute néanmoins la NMP de dilution, laisse revenir à température ambiante et stocke. On obtient un collodion très coloré et peu visqueux ( ≃ 10 poises ) donc inutilisable.

**Exemple 4** :

On utilise l'appareil décrit dans l'exemple 1.

**Réactifs :**

Etape 1 :

| | | |
|---|---|---|
| - ANTM .......................... | 61,44 g | (0,32 mole) |
| - DIDE (diisocyanato 4,4' diphényl éther) .................. | 40,32 g | (0,16 mole) |
| - DMEU .......................... | 125 ml | |

Etape 2 :

| | | |
|---|---|---|
| - AT ............................ | 10,62 g | (0,064 mole) |
| - AiSNa ......................... | 4,29 g | (0,016 mole) |
| - DMEU .......................... | 100 ml | |
| - DIDE .......................... | 60,48 g | (0,24 moles) |
| - DMEU .......................... | 100 ml | |
| - DMEU rinçages ................. | 39 ml | |
| - DMEU engagée à la polycondensation ................. | 364 ml(d=1,055)soit 384 g | |
| - DMEU dilution 27--> 21 %........ | 142 ml(d=1,055)soit 150 g | |

**Mode opératoire :**

Etape 1 :

On charge ANTM, DIDE et DMEU cuve démontée. On met en place la cuve, agite et purge à l'azote durant 45 mn. La température est montée à 198°C en 1 h 10 avec suivi du dégagement de $CO_2$ : 13,2 g piégés sur chaux sodée, théorie 14,08 g soit 93,75 %. On ajoute l'AT et l'AiSNa (en poudre) puis 100 ml de DMEU pour véhiculer ces 2 réactifs.

Etape 2 :

On stabilise la température de masse à 197-198 °C et ajoute en 25 mn la solution DIDE/DMEU puis rince l'ampoule de coulée par 39 ml de DMEU. On observe une montée en viscosité, valeur du couple 72 mv . On laisse réagir encore 10 mn, coule la DMEU de dilution en 10 mn. Après retour à la température ambiante on stocke le produit obtenu.

**Bilan $CO_2$ des 2 étapes :**

33,0 g (théorie 35,2 g) soit 93,75 %. il n'a pas été nécessaire de procéder à des ajouts de DIDE pour obtenir la montée en viscosité.

**Caractérisation :**

Viscosité : Epprecht Rhéomat 15 - cuve D + E - 25°C

| vitesse | lecture | f | η (poises) |
|---|---|---|---|
| 9 | 70 | 12,36 | 865 |

Masses moléculaires : GPC - 60 °C - Vecteur NMP à $5.10^{-2}$ N en LiBr

(Masse donnée en équivalent Polystyrène)

| Troncature | Mn | Mw | Mz | Polydispersité |
|---|---|---|---|---|
| 1000 | 30080 | 70560 | 119650 | 2,35 |

Température de transition vitreuse Tg ........ 272 °C

témoin PAI statistique ............ 280 °C

**Exemple 5 :**

**Appareil :** idem celui décrit dans l'exemple 1.

**Réactifs :**

Etape 1 : -ANTM .................... 76,8 g (0,4 mole)
-TDI (diisocyanato-2,4 toluène) ........ 34,8 g (0,2 mole)
-DMEU .................... 125 ml(d=1,055)soit 132 g

Etape 2 : -AT ...................... 13,28 g (0,08 mole)
-AiSNa .................. 5,36 g (0,02 mole)
-DMEU .................... 130 ml(d=1,055)soit 137 g
-TDI-2,4 ................. 52,2 g (0,3 mole)
-DMEU rinçages ........... 80ml+20ml(d=1,055)soit 105,5g

**Mode opératoire :**

Etape 1 :

On charge ANTM, DMEU et TDI-2,4 cuve démontée. On met en place la cuve et purge par un courant d'azote sous agitation durant 20 mn. On monte la température jusqu'à dégagement de $CO_2$ voisin de la théorie (0,4 mole soit 17,6g). Cette valeur est atteinte (17 g soit 96,6 % de la théorie) à 197 °C soit 1 H 20 après le début

du chauffage.

Etape 2 :

On ajoute l'AT, AiSNa (en poudre) et 130 ml de DMEU pour véhiculer ces 2 poudres dans la masse réactionnelle. A température masse de 192 °C on ajoute goutte à goutte en 50 mn la solution de TDI dans la DMEU (pas d'exothermicité, isotherme à 197 °C) puis on rince avec 2x10 ml de DMEU. L'isotherme à 198 °C est poursuivi durant 40 mn. On n'observe pas de montée en viscosité. On procède alors à des ajouts de TDI de 1 ml (3x1 ml). Après chaque addition on observe une élévation de la viscosité. On introduit encore 1 ml de TDI, on laisse en isotherme à 198°C durant 38 mn, on ajoute la DMEU de dilution en 10 min, laisse revenir à 50-60 °C et on stocke.

**Caractérisation :**

Masses moléculaires : GPC - 80 °C - Vecteur NMP à $5.10^{-2}$ N en LiBr

(Masse donnée en équivalent Polystyrène)

| Troncature | Mn | Mw | Mz | Polydispersité |
|---|---|---|---|---|
| 1500 | 35920 | 75270 | 130830 | 2,10 |

Viscosité : Epprecht Rhéomat 15 - cuve D + E - 25 °C

| vitesse | lecture | f | $\eta$ (poises) |
|---|---|---|---|
| 9 | 78 | 12,36 | 964 |

**Exemple 6 :**

On utilise l'appareil décrit dans l'exemple 1.

**But :** Réalisation d'un PAI au MDI sans AiSNa (stoechiométrie compensée par de l'acide isophtalique) avec addition séquencée des réactifs dans la DMPU.

**Appareillage :** on utilise l'appareil décrit dans l'exemple 1.

**Réactifs :**

Etape 1 :
- -ANTM ........................ 61,44 g (0,32 mole)
- -MDI ........................ 40 g (0,16 mole)
- -DMPU ........................ 125 ml

| | | |
|---|---|---|
| Etape 2 : | -AT .......................... | 10,62 g (0,064 mole) |
| | -AI (acide isophtalique) ...... | 2,66 g (0,016 mole) |
| | -DMPU ........................ | 100 ml |
| | -MDI ......................... | 60+3*=63 g (0,252 mole) |
| | -DMPU ........................ | 100 ml |
| | -DMPU rinçages ................ | 37 ml |
| | -DMPU dilution 27 --> 21 % .... | 149,4g(d=1,055)soit 142 ml |
| | -DMPU engagée à la polycondensation .................. | 385 g soit environ 362 ml |

*=excès de 3 %/MDI total engagé à la polycondensation.

**Mode opératoire :**

Etape 1 : -

On charge ANTM, MDI, DMPU, agite et purge par balayage d'azote durant 20 minutes. Début du chauffage jusqu'à 198°C en 1 h avec suivi du dégagement de $CO_2$ : 13,2 g piégés sur chaux sodée, théorie 14,08g soit 93,75 %.

Etape 2 :

On ajoute de l'AT et de l'AI en poudre puis de 100 ml de DMPU afin de véhiculer ces 2 réactifs. On stabilise la température masse à 198 °C et ajoute en 42 mn la solution MDI (63 g) /DMPU limpide, rinçage avec DMPU. La coulée est stoppée alors qu'il reste 15 ml de solution à couler (175 ml au départ), la viscosité évoluant très rapidement (valeur couple 324 md). Défaut de MDI par rapport aux 63 g mis en solution :
63x15 = 5,4 g soit (,4-3,0 = 2,4 g(-2,4 % par rapport à la stoechiométrie). Bilan $CO_2$ à la fin de l'étape : 95,2 %
Durée de l'addition de la diméthylpropylène urée de dilution 11 min. (La température masse diminue de 198 à 145°C). Retour à température ambiante. Stockage du polymère.

**Caractérisation :**

Viscosité : Epprecht Rhéomat 15 - cuve D+E - 25 °C

| vitesse | lecture | f | η (poises) |
|---|---|---|---|
| 4 | 56,4 | 55,40 | 3125 |

Masses moléculaires : GPC - 60 °C - Vecteur NMP à $5.10^{-2}$ N en LiBr

(Masse donnée en équivalent Polystyrène)

| Troncature | Mn | Mw | Mz | Polydispersité |
|---|---|---|---|---|
| 1000 | 36510 | 80390 | 135260 | 2,20 |

Température de transition vitreuse Tg ........ 272 °C

témoin PAI statistique ............ 280 °C

**Revendications**

**1** - Procédé pour l'obtention de polyamides-imides conformables semi-ordonnés issus d'un diisocyanate aromatique, d'anhydride trimellique et d'au moins un diacide aromatique, en proportions stoechiométriques ou avec léger excès de diisocyanate, dans la diméthylalkylène urée de pH $\leqq$ 7, par polycondensation en absence de catalyseur en deux phases distinctes comprenant :

1) la réaction entre x moles de diisocyanate aromatique de formule OCN-$R_1$-NCO et y moles d'anhydride trimellique à une température croissante de 0 à 200 °C en présence d'une quantité de diméthylalkylène urée de pH $\leqq$ 7 suffisante pour dissoudre le composé intermédiaire obtenu jusqu'à élimination pratiquement totale de dioxyde de carbone correspondant à la quantité théoriquement formée jusque là puis,

2) l'addition à température de 190 à 200 °C successivement de :

– z mole(s) de diacide aromatique dont

– t mole d'un diacide aromatique porteur de groupement $SO_3M$, véhiculés par de la diméthylalkylène urée de pH $\leqq$ 7, et

– v moles de diisocyanate aromatique correspondant au complément en diisocyanate, introduit dans la 1ère phase, goutte à goutte, et de la diméthylalkylène urée en quantité suffisante pour la dilution complète du polyamide-imide (PAI) avec :

$$x \simeq 0,5\ y$$
$$y + z = 1$$
$$0 \leqq t \leqq z$$
$$0,5\ y + z \leqq v \leqq 0,55\ y + 1,05\ z$$

**2** - Procédé selon la revendication 1 caractérisé par le fait que les différents constituants sont présents dans les proportions suivantes, ramenées en pourcentage :

x compris entre 35 et $\leqq$ 50 moles %
y compris entre 70 et $\leqq$ 100 moles %
z compris entre 0 et 30 moles %
t compris entre 0 et 30 moles %

**3** - Procédé selon la revendication 1 caractérisé par le fait que les différents constituants sont présents dans les proportions suivantes ramenées en pourcentage :

x compris entre 35 et 42,5 moles %
y compris entre 70 et $\leqq$ 85 moles %
z compris entre 15 et 30 moles %
t compris entre 2 et 10 moles %

**4** - Procédé selon la revendication 1 caractérisé par le fait que le diisocyanate est le diphényl-méthane 4,4'-diisocyanate.

**5** - Procédé selon la revendication 1 caractérisé par le fait que le diacide aromatique est l'acide téréphtalique.

**6** - Procédé selon la revendication 1 caractérisé par le fait que le composé acide porteur de groupe $SO_3M$ est le dicarboxybenzène-3,5 sulfonate de sodium.

Office européen des brevets

# RAPPORT DE RECHERCHE EUROPEENNE

Numero de la demande

EP 91 42 0139

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 360 707 (RHONE-POULENC)<br>* Revendications 12-21 * | 1 | C 08 G 18/34<br>C 08 G 73/14<br>C 08 G 18/08 |
| D,A | EP-A-0 194 058 (MITSUI TOATSU)<br>* Revendications 1,2, résumé; page 15, lignes 21-26 * | 1 | |
| A | US-A-4 736 008 (M. KOUNO et al.) | | |

| DOMAINES TECHNIQUES RECHERCHES (Int. Cl.5) |
|---|
| C 08 G |

Le présent rapport a été établi pour toutes les revendications

| Lieu de la recherche | Date d'achèvement de la recherche | Examinateur |
|---|---|---|
| LA HAYE | 27-08-1991 | VAN PUYMBROECK M.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)